# FASCICULE DE BREVET EUROPEEN

(11) **EP 0 716 493 B1**
(45) Date de publication et mention de la délivrance du brevet: **29.07.1998**
(21) Numéro de dépôt: 95402729.8
(22) Date de dépôt: 04.12.1995
(51) Int. Cl.: H02H 9/04, H01C 7/12

(54) **Dispositif de protection à l'encontre de surtensions transitoires à base de varistances et déconnecteurs thermiques**
Schutzvorrichtung gegen transiente Überspannungen mit Varistoren und thermischen Auslösern
Transient overvoltage protection device with varistors and thermal disconnectors

(30) Priorité: 05.12.1994 FR 9414586
(43) Date de publication de la demande: 12.06.1996
(73) Titulaire: SOULE MATERIEL ELECTRIQUE, 65200 Bagnères-de-Bigorre (FR)
(72) Inventeur: Lafon, Guy, F-65200 Bagneres de Bigorre (FR); Lagnoux, Alain,, F-65140 Rabastens de Bigorre (FR)
(74) Mandataire: Texier, Christian

(56) Documents cités:
- DE-A- 3 927 547
- DE-U- 9 115 238
- FR-A- 2 545 999
- PATENT ABSTRACTS OF JAPAN vol. 17 no. 140 (E-1336) ,22 Mars 1993 & JP-A-04 308678 (TOSHIBA) 30 Octobre 1992,
- PATENT ABSTRACTS OF JAPAN vol. 15 no. 417 (E-1125) ,23 Octobre 1991 & JP-A-03 173088 (TOSHIBA) 26 Juillet 1991,

## Description

La présente invention concerne le domaine des dispositifs de protection des équipements électroniques et/ou électrotechniques à l'encontre de surtensions électriques transitoires.

Plus précisément la présente invention concerne le domaine des dispositifs de protection à base de varistances.

On a déjà proposé de nombreux dispositifs de protection à l'encontre de surtensions transitoires, comportant au moins une varistance.

En particulier la Demanderesse a proposé depuis de nombreuses années des dispositifs de protection comprenant deux varistances connectées en parallèle, entre des lignes à protéger, par l'intermédiaire de déconnecteurs à déclenchement thermique respectifs, sensibles au vieillissement de la varistance respectivement associée.

De tels dispositifs offrent l'avantage de maintenir une protection efficace, y compris lorsque l'une des deux varistances arrive en fin de vie, grâce à la présence de la seconde varistance.

La présente invention a cependant pour but de perfectionner les dispositifs de protection connus de ce type.

Un but important de la présente invention est en particulier de proposer des moyens perfectionnés permettant de visualiser l'état des varistances formant le dispositif de protection.

Ces buts sont atteints selon la présente invention grâce à un dispositif de protection à l'encontre de surtensions transitoires, comprenant au moins deux varistances, des moyens de déconnexion sensibles à l'état de ces varistances et adaptés pour déconnecter individuellement chaque varistance en fin de vie de celle-ci et des moyens mécaniques de visualisation de l'état des varistances, reliés fonctionnellement aux moyens de déconnexion pour être actionnés par ceux-ci.

Selon une autre caractéristique avantageuse de la présente invention, les moyens mécaniques de visualisation sont adaptés pour distinguer les cas où 1) les deux varistances sont en service, 2) l'une des deux varistances est déconnectée et 3) les deux varistances sont déconnectées.

Selon une autre caractéristique avantageuse de la présente invention, les moyens mécaniques de visualisation comprennent un curseur actionné par les lames de déconnexion de deux varistances montées en parallèle, ledit curseur comprenant deux étages de doigts d'entrainement, les uns rigides, les autres flexibles pour franchir élastiquement une lame de déconnexion.

Selon une autre caractéristique avantageuse de la présente invention, les moyens mécaniques de visualisation comprennent en outre un tiroir de visualisation actionné par le curseur de commande.

Selon une autre caractéristique avantageuse de la présente invention, le dispositif comprend en outre des moyens de télésignalisation de la déconnexion de l'une au moins des varistances.

D'autres caractéristiques, buts et avantages de la présente invention apparaitront à la lecture de la description détaillée qui va suivre et en regard des dessins annexés donnés à titre d'exemple non limitatif et sur lesquels :
- la figure 1 représente le schéma électrique d'un dispositif de protection conforme à la présente invention,
- les figures 2 à 4 représentent le schéma électrique équivalent en cas de déficience de l'une ou des deux varistances,
- la figure 5 représente une vue en perspective d'un module de protection à une varistance, conforme à la présente invention,
- la figure 6 représente une vue en perspective éclatée du même module de protection à une varistance,
- la figure 7 représente un ensemble de deux modules de protection à une varistance appairés pour former une cellule de protection conforme à la présente invention,
- la figure 8 représente quatre cellules de protection conformes à la présente invention regroupées sur un support commun formé d'un circuit imprimé, pour la protection d'un réseau triphasé,
- la figure 9 représente une vue en perspective d'un dispositif mécanique de visualisation conforme à la présente invention,
- les figures 10, 11 et 12 représentent trois vues en plan de ce dispositif mécanique de visualisation à trois étapes successives de son fonctionnement,
- la figure 13 représente une autre vue du même dispositif mécanique de visualisation selon une vue orthogonale aux figures 10 à 12,
- la figure 14 représente une vue en perspective d'un dispositif mécanique de visualisation conforme à une variante de réalisation de la présente invention,
- la figure 15 représente une vue de détail du même dispositif, illustrant la coopération entre une lame de déconnexion et un curseur de visualisation, et
- les figures 16 à 18 représentent trois vues en plan de ce dispositif mécanique de visualisation à trois étapes successives de son fonctionnement.

Comme on l'a indiqué précédemment, le dispositif de protection conforme à la présente invention comprend au moins deux varistances 100a, 100b, des moyens 200a, 200b de déconnexion sensibles à l'état de ces varistances 100a, 100b et adaptés pour déconnecter individuellement chaque varistance 100a, 100b en fin de vie de celle-ci et des moyens mécaniques 300 de visualisation de l'état des varistances 100a, 100b, reliés fonctionnellement aux moyens de déconnexion 200a, 200b pour être actionnés par ceux-ci.

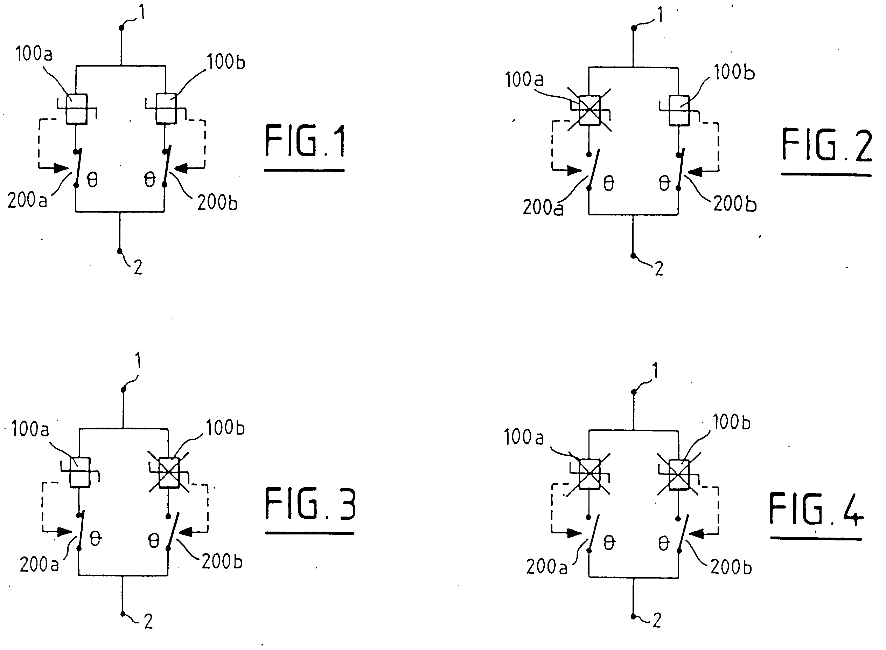

Plus précisément les deux varistances 100a et 100b sont de préférence connectées en parallèle, respectivement par l'intermédiaire de déconnecteurs thermiques 200a, 200b, entre les lignes à protéger 1, 2, comme on le voit sur la figure 1. Ces lignes 1 et 2 peuvent correspondre par exemple à une ligne de phase et une ligne de neutre ou de terre ou encore peuvent correspondre respectivement à une ligne de neutre et une ligne de terre, pour un réseau monophasé.

Les déconnecteurs thermiques 200a et 200b sont en contact thermique respectivement avec l'une des deux varistances 100a et 100b de sorte que l'échauffement interne des varistances 100a et 100b produit en fin de vie de celles-ci entraine l'ouverture des déconnecteurs.

Comme on le voit sur la figure 1, à l'origine, les deux varistances 100a et 100b sont en service et protègent les équipements raccordés aux lignes 1 et 2.

Lorsque l'une des deux varistances 100a ou 100b arrive en fin de vie, son échauffement provoque l'ouverture du déconnecteur 200a ou 200b associé. Cependant les équipements restent protéger par l'autre varistance 100b ou 100a, comme on le voit sur la figure 2 ou la figure 3.

En pratique les varistances réalisées de nos jours présentent des dispersions suffisantes pour garantir que les deux varistances 100a et 100b n'arrivent pas en fin de vie simultanément.

Enfin lorsque les deux varistances 100a et 100b arrivent en fin de vie, celles-ci sont isolées toutes les deux des lignes 1 et 2, comme illustré sur la figure 4.

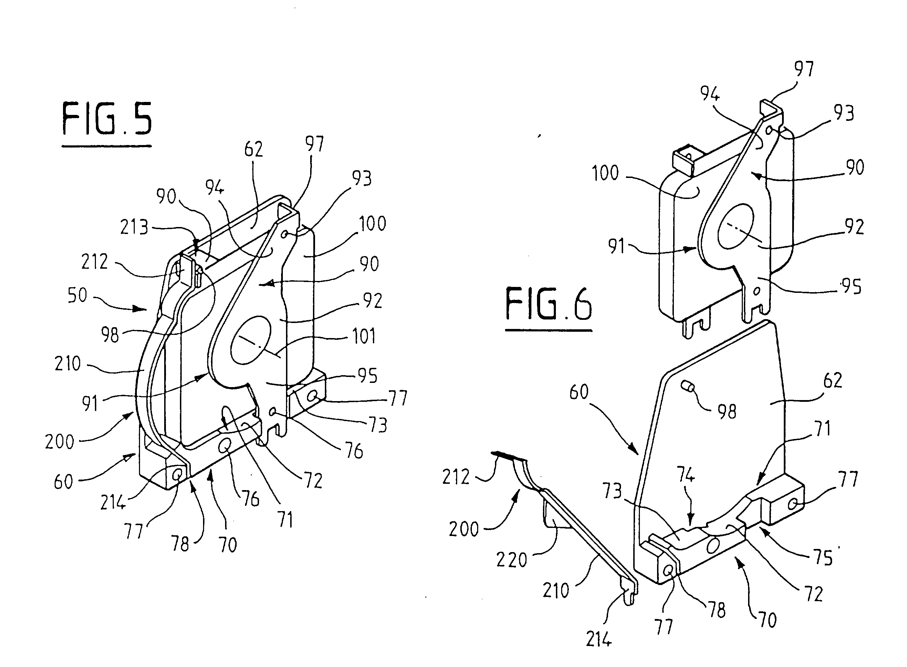

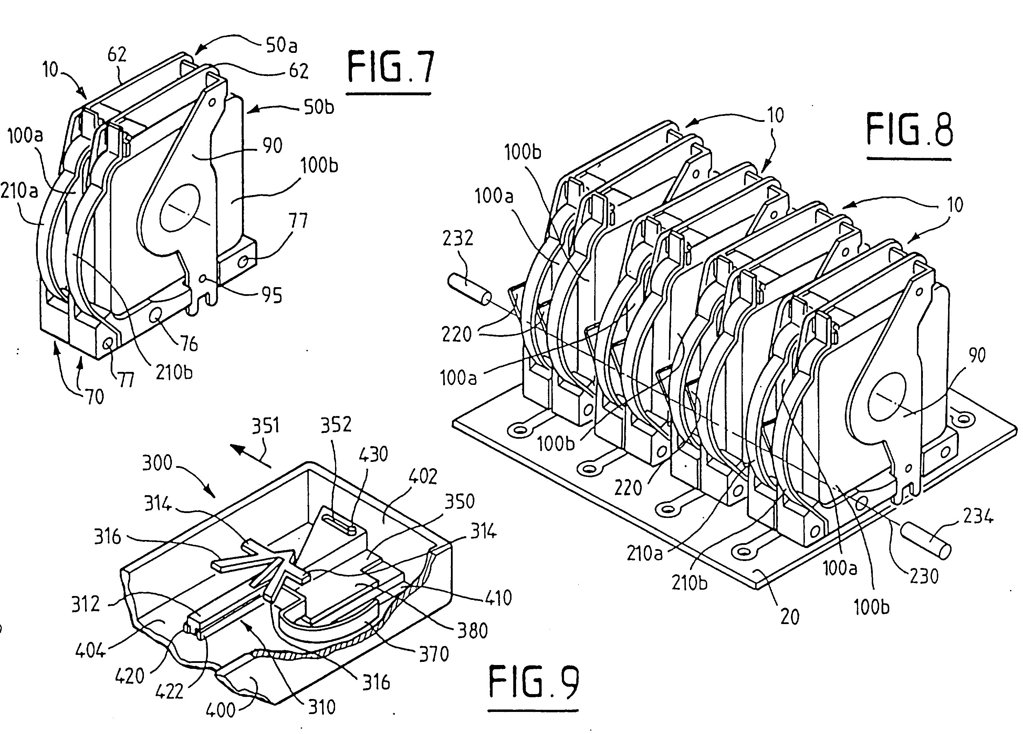

Chaque cellule de protection 10 comprenant deux varistances 100a et 100b, comme illustrée sur la figure 7, est formée de préférence de deux modules 50 identiques contenant chacun une varistance 100 comme illustré sur les figures 5 et 6.

Plus précisément chaque module 50 est formé de préférence d'une embase support 60 en matériau électriquement isolant, d'une varistance 100, de deux lames de connexion 90 électriquement conductrices et d'un déconnecteur thermique 200.

L'embase support 60 peut faire l'objet de nombreux modes de réalisation. De préférence elle est réalisée par moulage d'une pièce en matière plastique.

Selon le mode de réalisation préférentiel représenté sur les figures annexées chaque embase support 60 comprend une paroi plane 62 et une semelle 70.

La paroi 62 possède de préférence un contour généralement trapézoïdal. Cette paroi 62 permet de garantir la séparation électrique des lames 90 de deux modules 50 adjacents empilés comme représenté sur les figures 7 et 8 et par conséquent de garantir la séparation électrique des varistances 100 empilées.

La semelle 70 est solidaire de la base de la paroi 62, en saillie latéralement sur celle-ci. La semelle 70 a de préférence la forme générale d'un bloc parallélépipédique.

La surface supérieure 71 de la semelle 70 est de préférence munie de plusieurs berceaux 72, 73 adaptés pour recevoir des varistances 100 de différentes géométries. Ainsi selon le mode de réalisation représenté sur les figures annexées, la surface supérieure 71 comprend un premier berceau 72 central formé d'une calotte cylindrique adaptée pour recevoir une varistance 100 constituée d'un disque de contour cylindrique et un second berceau 73, qui encadre le premier, adapté pour recevoir une varistance 100 constituée d'une plaquette de contour général carré à angles arrondis.

Ces varistances 100 formées de disques ou plaquettes sont accolées à la paroi 62, avec leur axe 101 perpendiculaire à cette paroi 62 et sensiblement centré sur celle-ci.

Selon un mode de réalisation non limitatif, l'embase support 60 peut être adaptée par exemple pour recevoir au choix des varistances rondes de 20 mm, 25 mm, 32 mm ou 40 mm de diamètre, des varistances carrées de 34 mm de côté et ceci pour toutes les tensions comprises entre 275 V et 420 V.

Les deux lames de connexion 90 sont de préférence identiques. Elles sont disposées respectivement de part et d'autre de la varistance 100 associée et prennent ainsi celle-ci en sandwich. Chaque module 50 comprend ainsi selon son épaisseur successivement : la paroi 62, une première lame de connexion 90, une varistance 100 et la seconde lame de connexion 90.

De préférence selon le mode de réalisation préférentiel représenté sur les figures annexées, chaque lame 90 est formée par découpe et estampage dans une plaque de métal électriquement conducteur. Elle comprend un corps principal 91 plan qui comporte une âme centrale 92 adaptée pour être fixée sur une électrode de la varistance 100 et prolongée par deux ailes 94, 95 sensiblement diamétralement opposées par rapport à l'axe 101 de l'âme central 92 et de la varistance 100.

L'aile inférieure 95 est adaptée à son extrémité libre opposée à l'âme 92, pour un raccordement électrique, par exemple sur un circuit imprimé.

L'aile supérieure 94 est de préférence adaptée pour être fixée sur la paroi 62 au voisinage du bord supérieur de celui-ci. Cette aile 94 peut être fixée sur la paroi 62 par exemple à l'aide d'un rivet 93 ou par bouterrolage d'un téton 98 venu de moulage sur la paroi 62 ou encore par tout moyen équivalent.

Cette aile 94 est avantageusement munie à son extrémité libre située sur l'extérieur de la varistance, d'un prolongement 97 plié à 90°, soit perpendiculairement au plan du corps 91. Ce prolongement 97 sert de point de liaison par soudure à une lame 210 du déconnecteur 200 comme on le décrira par la suite.

L'extrémité de l'aile 95 de l'une des lames 90 peut être logée dans une chambre complémentaire 74 traversant la semelle 70 en position adjacente à la paroi 62 et parallèlement à celle-ci. L'extrémité de l'aile 95 de l'autre lame 90 peut être logée dans une cavité 75 complémentaire formée latéralement dans la semelle 70.

Ces extrémités des ailes 95 peuvent être fixées sur la semelle 70 par tout moyen approprié, par exemple à l'aide de rivets 76 ou bouterrolage sur l'embase support 60, ou encore par tout moyen approprié.

La semelle 70 est également munie de préférence de lumières 76, 77 perpendiculaires à la paroi 62 conçues pour permettre d'assembler entre eux plusieurs modules 50.

Chaque déconnecteur 200 comprend de préférence une lame 210 formée en un métal ressort élastique et électriquement conducteur. La lame 210 est de préférence généralement plane au repos.

Une première extrémité 212 de la lame 210 est fixée par soudure 213 sur le prolongement 97 de l'une des lames de connexion 90 à l'aide d'un alliage fusible à basse température. Cette lame 90 étant en contact avec la varistance 100, la soudure 213 est placée à la température de cette varistance 100. Cette soudure 213 est adaptée pour fondre lorsque la température de la varistance 100 dépasse un seuil en fin de vie.

La lame 210 est placée latéralement en regard de la tranche de la varistance 100 le long d'un bord vertical de la paroi 62. Ainsi la lame de déconnexion thermique 210 est située dans le même plan que la varistance 100 ce qui permet d'optimiser l'encombrement de l'ensemble.

La seconde extrémité 214 de la lame 210 est fixée sur la semelle 70 par tout moyen approprié. De préférence cette seconde extrémité 214 de la lame 210 est engagée dans un canal complémentaire 78 formé dans la semelle 70. L'orientation de ce canal 78 est adaptée pour imposer une déformation élastique ou bandage de la lame 210 comme on le voit à l'examen comparé des figures 5 et 6, lorsque les extrémités 212 et 214 de cette lame 210 sont respectivement soudées sur le prolongement 97 et engagée dans le canal 78.

Ainsi la lame 210 est soudée en contrainte et sollicitée par son élasticité intrinsèque vers une position de séparation du prolongement 97 dès rupture de la soudure 213.

Quand la varistance 100 arrive en fin de vie elle s'échauffe progressivement et fait fondre l'alliage fusible 213. La lame de déconnexion 210 est ainsi libérée et grâce à son élasticité, s'éloigne de la lame 90 associée.

La lame de déconnexion 210 assure ainsi une quadruple fonction : a) en fonctionnement normal elle sert à la liaison électrique de la varistance 100, b) en fin de vie d'une varistance 100 elle sert à déconnecter celle-ci, et c) à garantir le respect de l'isolement électrique après déconnexion et enfin d) elle sert également à l'entrainement de la visualisation de la déficience de la varistance 100.

L'extrémité 214 de la lame 210 est également adaptée pour un raccordement par exemple sur un circuit imprimé.

La cellule 50 est raccordée entre les lignes 1 et 2 par l'intermédiaire de l'extrémité 214 de la lame de déconnexion 210 et de l'extrémité de l'aile 95 de la lame de connexion 90 opposée à la lame de déconnexion 210.

Pour appairer deux modules 50 afin de former une cellule 10 il suffit de fixer entre elles les semelles 70 de deux modules adjacents comme illustré sur la figure 7.

Ces deux modules 50 peuvent par exemple être soudés en position parallèle sur un circuit imprimé de raccordement.

Bien entendu les deux lames de déconnexion 210 associées respectivement aux varistances 100 d'une même cellule 10 sont indépendantes entre elles.

Comme on l'a représenté sur la figure 8, pour la protection d'un réseau triphasé, on peut ainsi disposer quatre cellules 10 comprenant chacune deux modules 50, sur un circuit imprimé commun 20. Les différentes varistances 100 ont leurs axes respectifs 101 coaxiaux.

Chaque module de protection 50 constitue un élément de protection autonome et indépendant du boitier 400 dans lequel il est intégré.

On va maintenant décrire la structure des moyens de visualisation 300 représenté sur les figures 9 à 13.

Ces moyens de visualisation 300 sont adaptés pour informer un observateur de l'état des deux varistances 100 de chaque cellule 10, en distinguant les trois cas illustrés sur les figures 1 à 4 où respectivement : a) les deux varistances 100 sont valides (figure 1), b) l'une des deux varistances 100 est hors service (figure 2 ou 3) et bien que la protection soit encore assurée il est souhaitable de changer la cellule de protection, et c) les deux varistances 100 sont déficientes (figure 4) auquel cas la protection n'étant plus assurée, il est nécessaire de changer la cellule de protection.

Ces moyens de visualisation 300 coopèrent avec la lame de déconnexion 210, plus précisément l'extrémité 212 de celle-ci.

Selon le mode de réalisation préférentiel représenté sur les figures 9 à 13, les moyens de visualisation 300 comprennent, pour chaque cellule 10, un curseur de commande 310 et un tiroir de visualisation 350.

Le curseur 310 et le tiroir 350 sont realisés de préférence par moulage de pièces en matière plastique. Le tiroir 350 est de préférence au moins partiellement formé de matière de couleur rouge ou muni d'un revêtement au moins partiel de couleur rouge sur une zone de sa surface déplacée en regard d'une fenêtre de visualisation 410 réalisée dans un boitier 400 du dispositif, comme on va le décrire par la suite.

Sur les figures annexées le boitier 400 est seulement partiellement représenté. Plus précisément sur la figure 9 on a représenté un boitier 400 adapté pour recevoir une cellule de protection 10 comprenant deux modules 50 et donc deux varistances 100. Pour un dispositif de protection d'un réseau triphasé comprenant quatre cellules de protection 10, les dimensions du boitier 400 doivent bien entendu être adaptées en conséquence. Par ailleurs dans ce dernier cas, le boitier 400 est muni de quatre systèmes de visualisation 300 distincts associés respectivement à chaque cellule de protection 10.

Sur les figures 9 à 13 on a représenté notamment deux parois latérales 402 et 404 du boitier 400, orthogonales entre elles et destinées à être placées en regard de la tranche des varistances 100. Plus précisément la paroi 402 est placée en regard de la lame de déconnexion 210, tandis que la paroi 404 est placée en regard du bord supérieur de la paroi 62.

La fenêtre 410 est de préférence formée dans la paroi 404.

Le curseur 310 et le tiroir 350 sont de préférence guidés à translation, dans des directions respectivement orthogonales, sur le boitier 400. A cette fin le boitier 400 est muni avantageusement sur sa surface interne de structures venues de moulage permettant de guider à translation le curseur 310 et le tiroir 350.

On aperçoit ainsi sur la figure 9 des nervures rectilignes et parallèles 420, 422 venues de moulage sur la face interne de la paroi 404 du boitier 400 et adaptées pour guider le curseur 310 à translation dans une direction 311 parallèle au plan moyen des varistances 100. De même on aperçoit sur la figure 9 un doigt 430 venu de moulage en saillie sur la face interne de la paroi 404 du boitier et engagée dans une lumière oblongue 352 formée dans le tiroir 350 pour guider celui-ci à translation dans une direction 351 orthogonale à la direction 311 précitée et au plan moyen des varistances 100.

Bien entendu le curseur 310 et le tiroir 350 peuvent être guidés sur le boitier 400 par d'autres moyens fonctionnellement équivalents.

Le curseur de commande 310 est adapté pour être entrainé en déplacement par les deux lames de déconnexion 210 associées respectivement aux deux varistances 100a et 110b d'une même cellule de protection.

Plus précisément le curseur 310 est adapté pour être déplacé d'une première amplitude, selon la direction 311, lorsque l'une quelconque de ces deux lames de déconnexion 210 est déplacée en position d'ouverture aprés fusion de la soudure correspondante 213, et être déplacé d'une seconde amplitude, dans la même direction 311, lorsque les deux lames de déconnexion 210 de la cellule 10 sont en position d'ouverture.

Le curseur 310 possède de préférence une symétrie par rapport à un plan parallèle à la direction 311 et qui correspond également à un plan de symétrie pour les deux varistances 100 d'une même cellule 10.

Selon le mode de réalisation particulier et non limitatif représenté sur les figures 9 à 13, le curseur 310 est formé d'un barreau central 312 pourvu de chaque côté du plan de symétrie précité de deux étages de doigt d'entrainement 314 et 316. Les doigts 314 du premier étage sont relativement rigides. Ils sont de préférence perpendiculaires au barreau 312. Les doigts 316 sont au contraire plus souples. Ils sont formés de préférence d'éléments rectilignes inclinés par rapport au barreau 312 et à la direction 311. Ainsi les doigts 316 forment typiquement un "V" dont la pointe est dirigée vers la paroi 402, soit vers l'avant en référence au déplacement du curseur 310.

Les extrémités 212 des deux lames de déconnexion 210 d'une même cellule de protection 10 sont placées respectivement entre les doigts 314 et 316 du curseur 310.

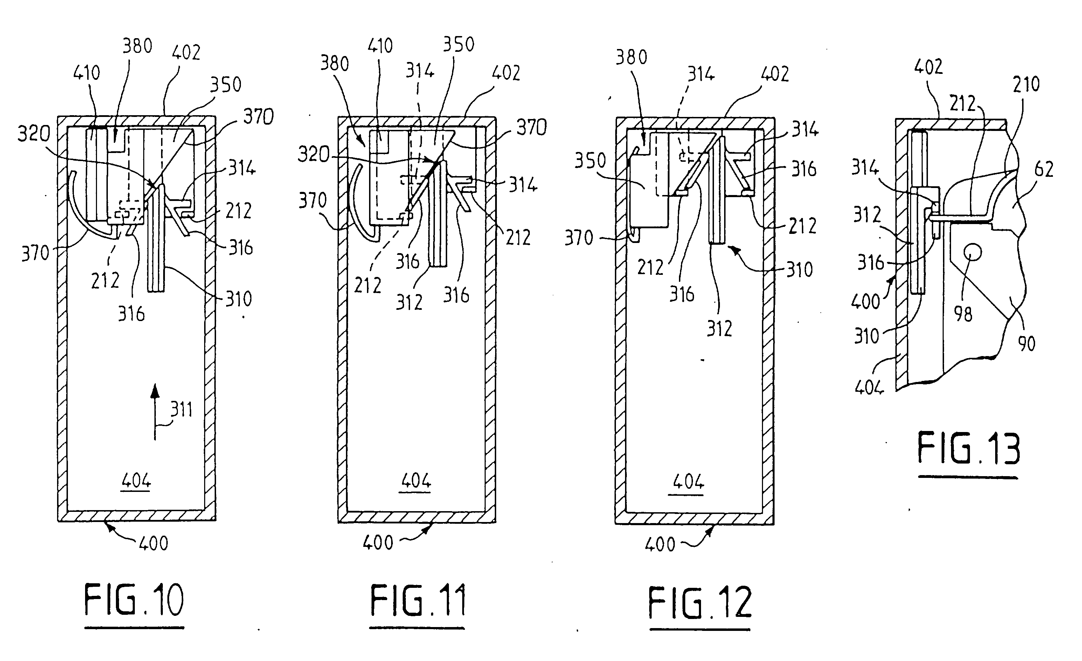

Ainsi lorsque l'une des lames de déconnexion 210 est libérée par fusion de la soudure 213 correspondante, elle déplace le curseur 310 à translation sur une première amplitude, en rapprochement de la paroi 402, par sollicitation de l'un des doigts 314 du premier étage, comme on le voit à l'examen comparé des figures 10 et 11. Au cours de ce processus le doigt 316 du second étage situé de l'autre côté du plan de symétrie du curseur 310 franchit élastiquement l'extrémité de la seconde lame de déconnexion 210, comme on le voit également à l'examen comparé des figures 10 et 11.

De ce fait lorsque la seconde lame de déconnexion 210 est libérée à son tour par fusion de la soudure 213 correspondant, elle déplace à nouveau le curseur 310 à translation sur une seconde amplitude, en rapprochement de la paroi 402, par sollicitation du doigt 316 précité du second étage, comme on le voit à l'examen comparé des figures 11 et 12.

Ce double déplacement du curseur 310 est exploité pour visualiser respectivement le mode dégradé de protection dans lequel une seule varistance reste active (figures 2 ou 3) et le mode hors protection dans lequel les deux varistances 100 sont inactives (figure 4).

Pour celà le curseur 310 et le tiroir 350 coopèrent par l'intermédiaire de structures d'entrainement 320, 370 inclinées par rapport aux directions de déplacement 311 et 351, par exemple à environ 60 et 30° respectivement de ces deux directions.

Sur le curseur 310 la face d'entrainement 320 peut être formée par l'un des doigts 316.

L'homme de l'art comprendra aisément à l'examen des figures 10 à 12 que le déplacemnet en deux temps du curseur 310 dans la direction 311 permet de déplacer de même en deux temps le tiroir de visualisation 350 dans la direction 351, en regard de la fenêtre 410.

Le tiroir 350 est par ailleurs sollicité par une structure élastique 370 vers sa position d'origine représentée sur la figure 10. Selon le mode de réalisation préférentiel représenté sur les figures annexées, cette structure élastique 370 est formée d'une lame incurvée venue de moulage avec le tiroir 350 et qui repose sur une paroi du boitier 400. En variante cependant une telle lame de sollicitation venue de moulage 370 pourra être remplacée par toute structure élastique distincte appropriée rapportée sur le tiroir 350 (par exemple un ressort spiral en métal, ou un moyen équivalent).

Par ailleurs le tiroir 350 possède des structures 380 déplacées en regard de la fenêtre 410, adaptées pour présenter un aspect visuel différent à travers cette fenêtre, en fonction de la position du tiroir 350.

Comme on le voit sur les figures 10 à 12, il peut s'agir de stuctures 380 de géométrie adaptée pour ne recouvrir que partiellement la fenêtre 410 lorsque le tiroir 350 est déplacé sur une première amplitude et pour recouvrir totalement cette fenêtre 410 lorsque le tiroir 350 est déplacé sur la seconde amplitude. En variante il peut s'agir d'une paroi du tiroir 350 qui recouvre totalement en permanence la fenêtre 410, mais qui présente un aspect visuel (de préférence une couleur) différent selon la zone de sa surface placée en regard de la fenêtre 410.

Ainsi de préférence la fenêtre 410 apparait quasi intégralement 1) de couleur blanche ou verte lorsque les deux varistances 100a et 100b sont en service et offrent 100% de protection, 2) partiellement en couleur rouge, lorsque l'une des deux varistances 100 est hors service et le dispositif est placé en mode dégragé, et 3) totalement en couleur rouge lorsque les deux varistances 100 sont hors service.

Ainsi l'utilisateur est averti de l'usure du dispositif de protection par mise hors service d'une varistance 100, avant sa destruction totale et donc avant l'absence totale de protection.

Selon l'invention le dispositif de protection est muni en outre de moyens permettant une télédétection de la déconnexion de l'une au moins des lames 210, afin de signaler la déficience de l'une au moins des varistances 100 et donc la nécessité de changer dés que possible la cellule 10 ou le module 50 correspondant.

De tels moyens de télédétection peuvent faire l'objet de différents modes de réalisation.

Selon le mode de réalisation préférentiel représenté sur les figures 6 et 8 annexées ces moyens comprennent un volet 220 sur chaque lame 210, associé à une barrière optique de détection 230.

Chaque volet 220 peut être formé par exemple par pliage à 90° d'une patte solidaire du corps de la lame 210, dans un plan parallèle au plan moyen des varistances 100, sur l'extérieur de ce corps.

La barrière optique de détection 230 est formée par un émetteur optique 232 et un récepteur 234 associé, définissant une barrière de détection 230 parallèle aux axes 101 des varistances. Cette barrière 230 est située sur l'extérieur des modules 10 à proximité des volets 220 de sorte que en fonctionnement normal la barrière optique 230 ne soit pas occultée par un volet 220 quelconque, mais que cependant cette barrière 230 soit interrompue par un volet dès que la lame de déconnexion correspondant 210 est déplacée en position d'ouverture après fusion de la soudure 213 associée.

La rupture de cette barrière optique 230 peut être exploitée par des moyens conventionnels qui ne seront pas décrits par la suite pour opérer une télésignalisation.

L'utilisation d'un tiroir de visualisation 350 associé à un curseur 310, permet une plus grande liberté dans le choix du pourcentage de la fenêtre 410 recouverte dans chaque position de visualisation que l'utilisation du seul curseur 310. Un dispositif de visualisation comprenant seulement un tel curseur 310 ne permet en principe que des pourcentages de recouvrement de pas constant, typiquement 0%, 50% et 100%, les déplacements successifs du curseur 310 provoqués par les ouvertures des lames 210 étant d'amplitudes identiques.

Bien entendu la présente invention n'est pas limitée aux modes de réalisation particuliers qui viennent d'être décrits mais s'étend à toutes variantes conformes à son esprit.

Ainsi par exemple selon une variante de réalisation, le tiroir de visualisation 350 pourrait être supprimé, la visualisation de l'état des deux varistances 100 d'une cellule 10 étant alors opérée par déplacement du curseur 310 lui même en regard de la fenêtre 410.

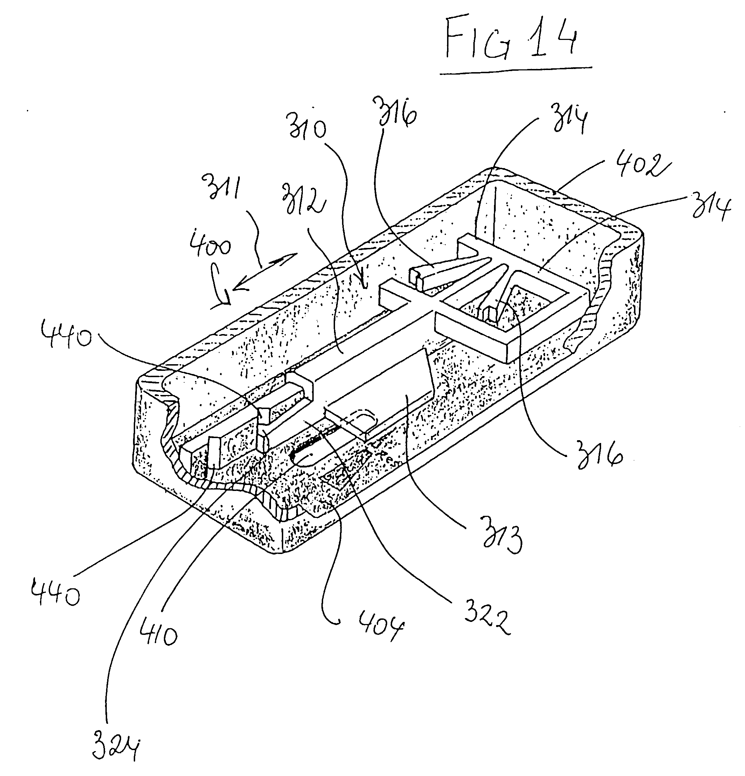

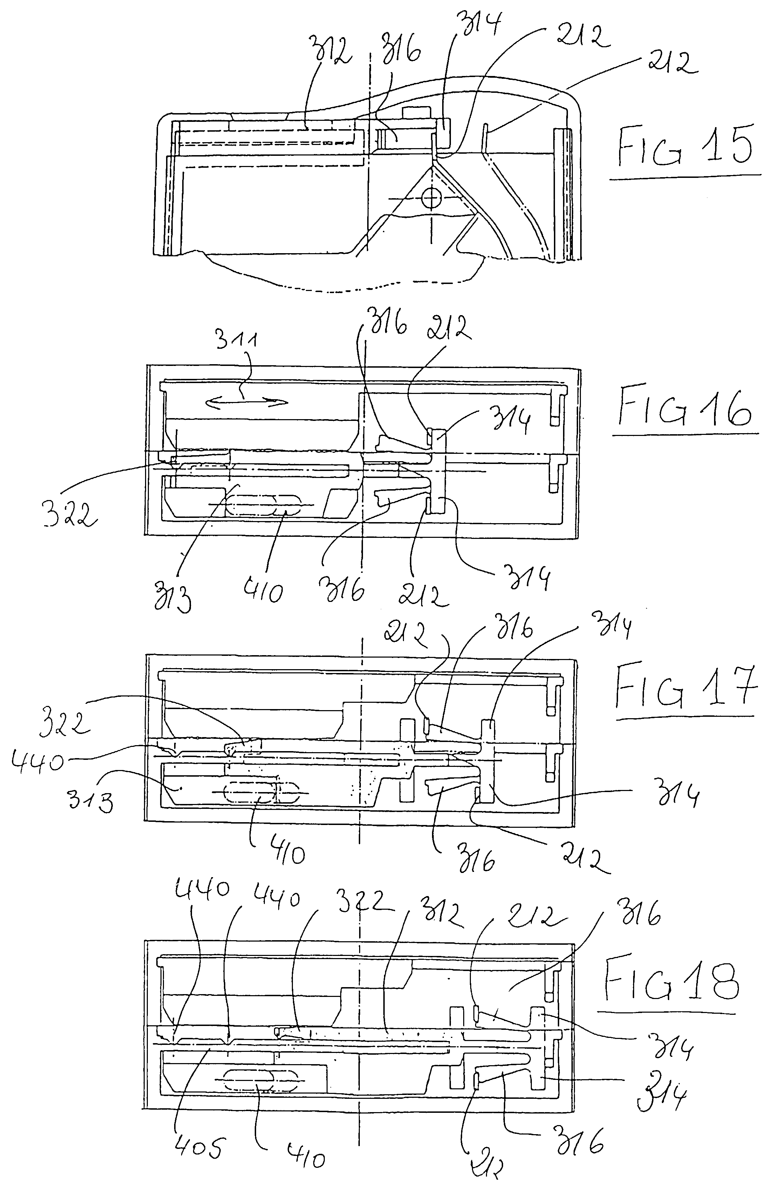

On va maintenant décrire la variante de réalisation des moyens de visualisation illustrés sur les figures 14 à 18.

On retrouve sur ces figures 14 à 18 un dispositif de visualisation comprenant un curseur 310 guidé à translation dans la direction 311 contre une paroi 404 du boîtier 400, en regard d'une fenêtre 410, formée dans cette paroi 404.

Le curseur 310 comprend là encore un barreau 312 muni de deux doigts rigides 314 et deux doigts souples 316, comme indiqué précédemment.

De même, comme indiqué en regard des figures 10 à 13, à l'origine, les extrémités 212 des deux lames de déconnexion 210 d'une même cellule de protection 10 sont placées respectivement entre les doigts 314 et 316 du curseur 310.

La première lame de déconnexion 210 activée déplace le curseur 310 sur une première amplitude, par sollicitation du doigt associé 314. Simultanément le doigt souple 316 opposé franchit élastiquement la seconde lame de déconnexion de sorte que celle-ci se retrouve alors en regard de l'extrémité de ce doigt souple 316.

L'activation de cette seconde lame de déconnexion 210 déplace alors le curseur 310 sur une seconde amplitude.

Ces déplacements sont visualisés par une couverture différente de la fenêtre 410, par le curseur 310, plus précisément une aile 313 solidaire du barreau 312.

Le curseur 310 peut être guidé dans la direction 311 par tout moyen approprié, par exemple par une nervure 405 solidaire de la paroi 404.

Comme on le voit sur les figures 14 à 18, le curseur 310 peut être indexé dans sa translation, par une poutre élastique 322 munie d'une denture 324 déplacée en regard d'une surface d'indexation possédant dont deux crans 440, formée sur la paroi 404.

## Revendications

1. Dispositif de protection à l'encontre de surtensions électriques transitoires, comprenant au moins deux varistances (100a, 100b), des moyens (200a, 200b) de déconnexion sensibles à l'état de ces varistances (100a, 100b) et adaptés pour déconnecter individuellement chaque varistance en fin de vie de celle-ci et des moyens mécaniques (300) de visualisation de l'état des varistances (100a, 100b), reliés fonctionnellement aux moyens de déconnexion (200) pour être actionnés par ceux-ci.

2. Dispositif selon la revendication 1, caractérisé par le fait que les moyens mécaniques de visualisation (300) sont adaptés pour distinguer les cas où 1) les deux varistances (100a, 100b) sont en service, 2) l'une des deux varistances (100a, 100b) est déconnectée et 3) les deux varistances (100a, 100b) sont déconnectées.

3. Dispositif selon l'une des revendications 1 ou 2, caractérisé par le fait que les moyens mécaniques de visualisation (300) comprennent un curseur (310) actionné par les lames de déconnexion (210) de deux varistances (100a, 100b) montées en parallèle, ledit curseur (210) comprenant deux étages de doigts d'entrainement (214, 216), les uns (214) rigides, les autres (216) flexibles pour franchir élastiquement une lame de déconnexion (210).

4. Dispositif selon l'une des revendications 1 à 3, caractérisé par le fait que les moyens mécaniques de visualisation (300) comprennent en outre un tiroir de visualisation (350) actionné par le curseur de commande (310).

5. Dispositif selon l'une des revendications 1 à 4, caractérisé par le fait qu'il comprend en outre des moyens (232, 234, 220) de télésignalisation de la déconnexion de l'une au moins des varistances (100).

6. Dispositif selon l'une des revendications 1 à 5, caractérisé par le fait que chaque cellule de protection (10) comprenant deux varistances (100a et 100b) est formée de deux modules (50) identiques.

7. Dispositif selon la revendication 6, caractérisé par le fait que chaque module (50) est formé d'une embase support (60) en matériau électriquement isolant, d'une varistance (100), de deux lames de connexion (90) électriquement conductrices et d'un déconnecteur thermique (200).

8. Dispositif selon la revendication 7, caractérisé par le fait que chaque embase support (60) comprend une paroi plane (62) permettant d'isoler deux varistances (100) adjacentes et une semelle (70) servant de berceau d'appui à une varistance (100).

9. Dispositif selon la revendication 8, caractérisé par le fait que la surface supérieure (71) de la semelle (70) est munie de plusieurs berceaux (72, 73) adaptés pour recevoir des varistances (100) de différentes géométries.

10. Dispositif selon la revendication 9, caractérisé par le fait que la surface supérieure (71) de la semelle (70) comprend un premier berceau (72) central formé d'une calotte cylindrique adaptée pour recevoir une varistance (100) constituée d'un disque de contour cylindrique et un second berceau (73), qui encadre le premier, adapté pour recevoir une varistance (100) constituée d'une plaquette de contour général carré à angles arrondis.

11. Dispositif selon l'une des revendications 1 à 10, caractérisé par le fait que les deux lames de connexion (90) associées à une varistance (100) sont identiques.

12. Dispositif selon l'une des revendications 1 à 11, caractérisé par le fait que chaque module (50) comprend selon son épaisseur successivement : une paroi (62) électriquement isolante une première lame de connexion (90), une varistance (100) et une seconde lame de connexion (90).

13. Dispositif selon l'une des revendications 1 à 12, caractérisé par le fait que chaque lame (90) de connexion comprend un corps principal (91) plan qui comporte une âme centrale (92) adaptée pour être fixée sur une électrode de la varistance (100) et prolongée par deux ailes (94, 95) sensiblement diamétralement opposées par rapport à l'axe (101) de l'âme centrale (92) et de la varistance (100).

14. Dispositif selon l'une des revendications 1 à 13, caractérisé par le fait que chaque déconnecteur thermique (200) comprend une lame (210) formée en un métal ressort élastique et électriquement conducteur soudée sous contrainte mécanique sur une lame de connexion (90) reliée à la varistance (100).

15. Dispositif selon la revendication 14, caractérisé par le fait qu'une première extrémité (212) de la lame de déconnexion (210) est fixée par soudure (213) sur un prolongement (97) de l'une des lames de connexion (90) à l'aide d'un alliage fusible à basse température tandis que sa seconde extrémité (214) est fixée sur une semelle (70) d'une embase support (60).

16. Dispositif selon l'une des revendications 1 à 15, caractérisé par le fait que la lame (210) de déconnexion est placée latéralement en regard de la tranche de la varistance (100).

17. Dispositif selon l'une des revendications 1 à 16, caractérisé par le fait que la lame de déconnexion (210) assure une quadruple fonction : a) en fonctionnement normal elle sert à la liaison électrique de la varistance (100), b) en fin de vie d'une varistance (100) elle sert à déconnecter celle-ci, et c) à garantir le respect de l'isolement électrique après déconnexion et enfin d) elle sert également à l'entraînement de la visualisation de la déficience de la varistance (100).

18. Dispositif selon la revendication 4, caractérisé par le fait que le curseur (310) et le tiroir (350) sont guidés à translation, dans des directions respectivement orthogonales, sur un boîtier (400).

19. Dispositif selon l'une des revendications 1 à 18, caractérisé par le fait qu'il comprend un curseur (310) adapté pour être déplacé d'une première amplitude, selon une direction (311), lorsque l'une quelconque de deux lames de déconnexion (210) est déplacée en position d'ouverture après fusion de la soudure correspondante (213), et être déplacé d'une seconde amplitude, dans la même direction (311), lorsque les deux lames de déconnexion (210) de la cellule (10) sont en position d'ouverture.

20. Dispositif selon la revendication 19, caractérisé par le fait que le curseur (310) possède une symétrie par rapport à un plan parallèle à la direction (311) de translation.

21. Dispositif selon l'une des revendications 19 ou 20, caractérisé par le fait que le curseur (310) est formé d'un barreau central (312) pourvu de chaque côté d'un plan de symétrie de deux étages de doigt d'entraînement (314 et 316), les uns (314) relativement rigides et perpendiculaires au barreau (312), les autres (316) souples, formés d'éléments rectilignes inclinés par rapport au barreau (312) et à la direction (311) de translation.

22. Dispositif selon la revendication 21, caractérisé par le fait que les extrémités (212) de deux lames de connexion (210) d'une même cellule de protection (10) sont placées respectivement entre les doigts (314 et 316) du curseur (310).

23. Dispositif selon l'une des revendications 4 ou 18, caractérisé par le fait que le curseur (310) et le tiroir (350) coopèrent par l'intermédiaire de structures d'entrainement (320, 370) inclinées par rapport aux directions de déplacement (311 et 351) respectives de ceux-ci par exemple à environ 60° et 30° de ces deux directions.

24. Dispositif selon l'une des revendications 1 à 23 prise en combinaison avec l'une des revendications 3 ou 4, caractérisé par le fait que le tiroir (350) et/ou le curseur (310) est sollicité par une structure élastique (370) vers sa position d'origine.

25. Dispositif selon la revendication 24, caractérisé par le fait que la structure élastique (370) est formée d'une lame incurvée venue de moulage avec le tiroir (350) ou le curseur (310) et qui repose sur une paroi de boîtier (400).

26. Dispositif selon l'une des revendications 24 ou 25, caractérisé par le fait que le tiroir (350) ou le curseur (310) possède des structures (380) déplacées en regard d'une fenêtre (410) formée dans le boîtier (410) et adaptées pour présenter un aspect visuel différent à travers cette fenêtre, en fonction de la position du tiroir (350) ou du curseur (310).

27. Dispositif selon la revendication 5, caractérisé par le fait que les moyens de télésignalisation comprennent un volet (220) sur chaque lame (210) de déconnexion, associé à une barrière optique de détection (230).

28. Dispositif selon l'une des revendications 1 à 27, caractérisé par le fait qu'il comprend au moins trois cellules (10) comprenant chacune deux modules (50) possédant chacun une varistance (100) pour la protection d'un réseau triphasé.

29. Dispositif selon l'une des revendications 1 à 28, caractérisé par le fait qu'il comprend des moyens (322, 324 ; 440) d'indexation d'un curseur (310).

## Patentansprüche

1. Vorrichtung zum Schutz gegen das Auftreten von transienten elektrischen Überspannungen mit wenigstens zwei Varistoren (100a, 100b), Trennmitteln (200a, 200b), die gegen den Zustand dieser Varistoren (100a, 100b) empfindlich sind und die Varistoren an ihrem Lebensende einzeln abtrennen können, und mechanischen Mitteln (300) zum Visualisieren des Zustands der Varistoren (100a, 100b), die funktionell mit den Trennmitteln (200) verbunden sind, um durch diese betätigt zu werden.

2. Vorrichtung nach Anspruch 1, dadurch **gekennzeichnet**, daß die mechanischen Visualisierungsmittel (300) folgende Fälle unterscheiden können: 1) die beiden Varistoren (100a, 100b) sind in Betrieb; 2) einer der beiden Varistoren (100a, 100b) ist abgetrennt; und 3) die beiden Varistoren (100a, 100b) sind abgetrennt.

3. Vorrichtung nach einem der Ansprüche 1 oder 2, dadurch **gekennzeichnet**, daß die mechanischen Visualisierungsmittel (300) einen Läufer (310) aufweisen, der von den Trennzungen (210) zweier parallel montierter Varistoren (100a, 100b) betätigt wird, wobei der Läufer (310) zwei Stufen mit Mitnehmerfingern (314, 316) aufweist, von denen die einen (314) starr und die anderen (316) flexibel sind, um elastisch eine Trennzunge (210) zu passieren.

4. Vorrichtung nach einem der Ansprüche 1 bis 3, dadurch **gekennzeichnet,** daß die mechanischen Visualisierungsmittel (300) ferner einen Visualisierungsschieber (350) aufweisen, der von dem Steuerläufer (310) betätigt wird.

5. Vorrichtung nach einem der Ansprüche 1 bis 4, dadurch **gekennzeichnet,** daß sie Mittel (232, 234, 220) zum Fernsignalisieren der Trennung von wenigstens einem der Varistoren (100) aufweist.

6. Vorrichtung nach einem der Ansprüche 1 bis 5, dadurch **gekennzeichnet,** daß jede Schutzzelle (10) zwei Varistoren (100a, 100b) aufweist und aus zwei identischen Modulen (50) gebildet ist.

7. Vorrichtung nach Anspruch 6, dadurch **gekennzeichnet,** daß jedes Modul (50) aus einem Stützsokkel (60) aus einem elektrisch isolierenden Material, einem Varistor (100), zwei elektrisch leitenden Trennzungen (90) und einer thermischen Trennvorrichtung (200) gebildet ist.

8. Vorrichtung nach Anspruch 7, dadurch **gekennzeichnet,** daß jeder Stützsockel (60) eine ebene Wand (62), welche die Trennung von zwei benachbarten Varistoren (100) ermöglicht, und eine Fußplatte (70), die als Auflagefläche für einen Varistor (100) dient, aufweist.

9. Vorrichtung nach Anspruch 8, dadurch **gekennzeichnet,** daß die Oberseite (71) der Fußplatte (70) mehrere Stützflächen (72, 73) aufweist, welche Varistoren (100) mit unterschiedlichen Geometrien aufnehmen kann.

10. Vorrichtung nach Anspruch 9, dadurch **gekennzeichnet,** daß die Oberseite (71) der Fußplatte (70) eine erste zentrale Stützfläche (72) aufweist, die aus einer zylindrischen Kalotte gebildet ist und einen Varistor (100) aufnehmen kann, der aus einer Zylinderscheibe besteht, sowie eine zweite Stützfläche (73), welche die erste einrahmt und einen Varistor 100 aufnehmen kann, der aus einer Platte mit im wesentlichen viereckigem Umfang und abgerundeten Ecken besteht.

11. Vorrichtung nach einem der Ansprüche 1 bis 10, dadurch **gekennzeichnet,** daß die zwei Verbindungszungen (90), die zu einem Varistor (100) gehören, identisch sind.

12. Vorrichtung nach einem der Ansprüche 1 bis 11, dadurch **gekennzeichnet,** daß jedes Modul (50) entlang seiner Dicke nacheinander eine elektrisch isolierende Wand (62), eine erste Verbindungszunge (90), einen Varistor (100) und eine zweite Verbindungszunge (90) aufweist.

13. Vorrichtung nach einem der Ansprüche 1 bis 12, dadurch **gekennzeichnet,** daß jede Verbindungszunge (90) einen ebenen Hauptkörper (91) aufweist, der einen zentralen Steg (92) trägt, welcher an einer Varistorelektrode (100) befestigt werden kann und durch zwei Flügel (94, 95) verlängert wird, welche sich relativ zu der Achse (101) des zentralen Stegs (92) und des Varistors (100) im wesentlichen diametral gegenüberliegen.

14. Vorrichtung nach einem der Ansprüche 1 bis 13, dadurch **gekennzeichnet,** daß jede thermische Trennvorrichtung (200) eine Zunge (210) aufweist, die aus einem elektrisch leitenden und elastischen Federmetall gebildet ist und unter mechanischer Spannung an einer mit dem Varistor (100) verbundenen Verbindungszunge (90) befestigt ist.

15. Vorrichtung nach Anspruch 14, dadurch **gekennzeichnet,** daß ein erstes Ende (212) der Trennzunge (210) durch Löten (213) an einer Verlängerung (97) einer der Verbindungszungen (90) mit Hilfe einer bei niedriger Temperatur schmelzbaren Legierung befestigt ist, während das zweite Ende (214) an einer Fußplatte (70) eines Stützsockels (60) angebracht ist.

16. Vorrichtung nach einem der Ansprüche 1 bis 15, dadurch **gekennzeichnet,** daß die Trennzunge (210) im Verhältnis zu der Varistorscheibe (100) seitlich angeordnet ist.

17. Vorrichtung nach einem der Ansprüche 1 bis 16, dadurch **gekennzeichnet,** daß die Trennzunge (210) eine vierfache Funktion gewährleistet: a) im normalen Betrieb dient sie der elektrischen Verbindung des Varistors (100); b) am Lebensende eines Varistors (100) dient sie zum Abtrennen desselben und c) zum Sicherstellen der elektrischen Isolierung nach dem Abtrennen; und schließlich d) dient sie auch dem Antrieb für die Visualisierung der Störung des Varistors (100).

18. Vorrichtung nach Anspruch 4, dadurch **gekennzeichnet,** daß der Läufer (310) und der Schieber (350) in jeweils orthogonalen Richtungen auf einem Gehäuse (400) translatorisch geführt sind.

19. Vorrichtung nach einem der Ansprüche 1 bis 18, dadurch **gekennzeichnet,** daß sie einen Läufer (310) aufweist, der um eine erste Amplitude entlang einer ersten Richtung (311) verschoben werden kann, wenn eine der beiden Trennzungen (210) nach dem Schmelzen der entsprechenden Lötstelle (213) sich in eine Öffnungsstellung bewegt, und in derselben Richtung (311) um eine zweite Amplitude verschoben wird, wenn beide Trennzungen (210) der Zelle (10) in der Öffnungsstellung sind.

20. Vorrichtung nach Anspruch 19, dadurch **gekennzeichnet,** daß der Läufer (310) relativ zu einer zur Verschiebungsrichtung (311) parallelen Ebene symmetrisch ist.

21. Vorrichtung nach einem der Ansprüche 19 oder 20, dadurch **gekennzeichnet,** daß der Läufer (310) aus einem zentralen Stab (312) gebildet ist, der auf jeder Seite einer Symmetrieebene zwei Stufen mit Mitnehmerfingern (314, 316) aufweist, von denen die einen (314) relativ starr und senkrecht zu dem Stab (312) sind, und von denen die anderen (316) nachgiebig und von geradlinigen Elementen gebildet sind, welche relativ zu dem Stab (312) und der Verschiebungsrichtung (311) geneigt sind.

22. Vorrichtung nach Anspruch 21, dadurch **gekennzeichnet,** daß zwei Trennzungen (210) derselben Schutzzelle (10) jeweils zwischen den Mitnehmerfingern (314, 316) des Läufers (310) angeordnet sind.

23. Vorrichtung nach einem der Ansprüche 4 bis 18, dadurch **gekennzeichnet,** daß der Läufer (310) und der Schieber (350) mit Hilfe von Mitnehmerstrukturen (320, 370) zusammenwirken, welche im Verhältnis zu den jeweiligen Verschiebungsrichtungen (311, 351) dieser beiden geneigt sind, z.B. um ungefähr 60° und 30° zu diesen beiden Richtungen.

24. Vorrichtung nach einem der Ansprüche 1 bis 23, in Kombination mit einem der Ansprüche 3 oder 4, dadurch **gekennzeichnet,** daß der Schieber (350) und/oder der Läufer (310) von einer elastischen Struktur (370) in Richtung seiner Ursprungsposition vorgespannt ist.

25. Vorrichtung nach Anspruch 24, dadurch **gekennzeichnet,** daß die elastische Struktur (370) aus einer einwärts gekrümmten Zunge gebildet ist, die mit dem Schieber (350) oder dem Läufer (310) geformt wurde und gegen eine Wand des Gehäuses (400) anliegt.

26. Vorrichtung nach einem der Ansprüche 24 oder 25, dadurch **gekennzeichnet,** daß der Schieber (350) oder der Läufer (310) Strukturen (380) aufweisen, die abhängig von der Position des Schieber (350) oder des Läufers (310) vor ein Fenster geschoben werden, daß in dem Gehäuse (400) ausgebildet ist, und beim Queren dieses Fensters ein anderes Aussehen zeigen können.

27. Vorrichtung nach Anspruch 5, dadurch **gekennzeichnet,** daß die Fernsignalisierungsmittel eine Klappe (220) auf jeder Trennzunge (210) aufweisen, die einer optischen Erfassungssperre (230) zugeordnet ist.

28. Vorrichtung nach einem der Ansprüche 1 bis 27, dadurch **gekennzeichnet,** daß sie wenigstens drei Zellen (10) aufweist, von denen jede zwei Module (50) aufweist, die jeweils einen Varistor (100) haben, um ein dreiphasiges Netz zu schützen.

29. Vorrichtung nach einem der Ansprüche 1 bis 28, dadurch **gekennzeichnet,** daß sie Mittel (323, 324; 440) zum Indexieren eines Läufers (310) aufweist.

## Claims

1. A device for providing protection against transient electrical surges, the device comprising at least two varistors (100a. 100b), disconnection means (200a, 200b) responsive to the states of the varistors (100a, 100b) and adapted to disconnect each varistor individually at the end of its lifetime, and mechanical means (300) for displaying the states of the varistors (100a, 100b), and functionally connected to the disconnection means (200) to be actuated thereby.

2. A device according to claim 1, characterized by the fact that the mechanical display means (300) are adapted to distinguish between the following cases: 1) both varistors (100a. 100b) are in operation; 2) one of the two varistors (100a, 100b) is disconnected: and 3) both varistors (100a. 100b) are disconnected.

3. A device according to claim 1 or 2, characterized by the fact that the mechanical display means (300) comprise a traveller (310) actuated by the disconnection blades (210) of two varistors (100a, 100b) connected in parallel, said traveller (310) having two stages of drive fingers (214, 216) the fingers of one stage (214) being rigid and the fingers of the other stage (216) being flexible to go elastically past a disconnection blade (210).

4. A device according to any one of claims 1 to 3, characterized by the fact that the mechanical display means (300) further comprise a display slide (350) actuated by the control traveller (310).

5. A device according to any one of claims 1 to 4, characterized by the fact that it further comprises means (232, 234, 220) for remotely signalling disconnection of at least one of the varistors (100).

6. A device according to any one of claims 1 to 5, characterized by the fact that each protection cell (10) comprising two varistors (100a and 100b) is made up of two identical modules (50).

7. A device according to claim 6, characterized by the fact that each module (50) is formed by a supporting base (60) of electrically insulating material. a varistor (100), two electrically conductive connection blades (90), and a thermal disconnector (200).

8. A device according to claim 7, characterized by the fact that each supporting base (60) comprises a plane wall (62) enabling two adjacent varistors (100) to be isolated, and a sole plate (70) serving as a support cradle for a varistor (100).

9. A device according to claim 8. characterized by the fact that the top surface (71) of the sole plate (70) is provided with a plurality of cradles (72. 73) adapted to receive varistors (100) of different shapes.

10. A device according to claim 9, characterized by the fact that the top surface (71) of the sole plate (70) comprises a central first cradle (72) constituted by a portion of a cylindrical surface adapted to receive a varistor (100) constituted by a disk of cylindrical outline, and a second cradle (73) on either side of the first and adapted to receive a varistor (100) constituted by a slab of generally square outline with rounded corners.

11. A device according to any one of claims 1 to 10, characterized by the fact that the two connection blades (90) associated with a varistor (100) are identical.

12. A device according to any one of claims 1 to 11, characterized by the fact that each module (50) comprises the following in succession in its thickness direction: an electrically insulating wall (62), a first connection blade (90), a varistor (100). and a second connection blade (90).

13. A device according to any one of claims 1 to 12, characterized by the fact that each connection blade (90) comprises a plane main body (91) which includes a central core (92) adapted to be fixed on an electrode of the varistor (100) and extended by two arms (94, 95) that are substantially diametrically opposite about the axis (101) of the central core (92) and of the varistor (100).

14. A device according to any one of claims 1 to 13, characterized by the fact that each thermal disconnector (200) comprises a blade (210) formed by electrically conductive resilient spring metal bonded under mechanical stress to a connection blade (90) connected to the varistor (100).

15. A device according to claim 14, characterized by the fact that a first end (212) of the disconnection blade (210) is fixed by solder (213) to an extension (97) of one of the connection blades (90) using a low melting temperature alloy, while its second end (214) is fixed on a sole plate (70) of a supporting base (60).

16. A device according to any one of claims 1 to 15, characterized by the fact that the disconnection blade (210) is located laterally facing an edge of the varistor (100).

17. A device according to any one of claims 1 to 16, characterized by the fact that the disconnection blade (210) perform four functions: a) in normal operation it serves to provide electrical connection of the varistor (100): b) at the end of the lifetime of a varistor (100) it serves to disconnect it: c) after disconnection it guarantees electrical isolation; and d) it also serves to drive the display indicating that the varistor (100) has failed.

18. A device according to claim 4, characterized by the fact that the traveller (310) and the slide (350) are guided in translation in mutually orthogonal directions on a housing (400).

19. A device according to any one of claims 1 to 18, characterized by the fact that it includes a traveller (310) adapted to be displaced through a first amplitude in a particular direction (311) when either of the two disconnection blades (210) is displaced into its open position after the corresponding solder (213) has melted, and to be displaced through a second amplitude, in the same direction (311), when both disconnection blades (210) of the cell (10) are in the open position.

20. A device according to claim 19, characterized by the fact that the traveller (310) is symmetrical about a plane parallel to the translation direction (311).

21. A device according to claim 19 or 20. characterized by the fact that the traveller (310) is formed by a central bar (312) provided on either side of a plane of symmetry with two stages of drive fingers (314 and 316). the fingers in one of the stages (314) being relatively rigid and perpendicular to the bar (312), and the fingers of the other stage (316) being flexible. constituting rectilinear elements that are inclined relative to the bar (312) and to the translation direction (311).

22. A device according to claim 21, characterized by the fact that the ends (212) of the two connection blades (210) of the same protection cell (10) are placed between respective sets of fingers (314 and 316) of the traveller (310).

23. A device according to claim 4 or 18. characterized by the fact that the traveller (310) and the slide (350) co-operate via drive structures (320. 370) inclined relative to the respective displacement directions (311 and 351) thereof. e.g. at about 60° to 30° to said two directions.

24. A device according to any one of claims 1 to 23, taken in combination with claim 3 or 4, characterized by the fact that the slide (350) and/or the traveller (310) is urged by a resilient structure (370) towards its original position.

25. A device according to claim 24, characterized by the fact that the resilient structure (370) is formed by a curved blade integrally molded with the slide (350) or the traveller (310) and which rests against a wall of the housing (400).

26. A device according to claim 24 or 25, characterized by the fact that the slide (350) or the traveller (310) possesses structures (380) that are moved past a window (410) formed in the housing (400) and adapted to present different visual appearance through said window as a function of the position of the slide (350) or of the traveller (310).

27. A device according to claim 5. characterized by the fact that the remote signalling means comprise a flap (220) on each disconnection blade (210) associated with an optical detection barrier (230).

28. A device according to any one of claims 1 to 27, characterized by the fact that it comprises at least three cells (10) each comprising two modules (50) each possessing one varistor (100) to protect a three phase network.

29. A device according to any one of claims 1 to 28, characterized by the fact that it includes means (322. 324; 440) for indexing a traveller (310).
